# EUROPÄISCHE PATENTSCHRIFT

(11) **EP 3 628 526 B1**
(45) Veröffentlichungstag und Bekanntmachung des Hinweises auf die Patenterteilung: **20.07.2022**
(21) Anmeldenummer: 19196843.7
(22) Anmeldetag: 12.09.2019
(51) Int. Cl.: B60K 35/00, B60K 37/02

(54) **VORRICHTUNG ZUM ANZEIGEN EINES ZEITABHÄNGIGEN ZAHLENWERTES**
DEVICE FOR DISPLAYING A TIME-DEPENDENT NUMBER VALUE
DISPOSITIF D'AFFICHAGE D'UNE VALEUR NUMÉRIQUE DÉPENDANTE DU TEMPS

(30) Priorität: 18.09.2018 DE 102018122833
(43) Veröffentlichungstag der Anmeldung: 01.04.2020
(73) Patentinhaber: MAN Truck & Bus SE, 80995 München (DE)
(72) Erfinder: Mohra, Holger, 80805 München (DE); Kim, Zie-Na, 80337 München (DE); Aydemir, Fatih, 81539 München (DE); Ochs, Thomas, 82178 Puchheim (DE); Kreuzer, Fabian, 80802 München (DE); Huber, Johannes, 80639 München (DE); Jentsch, Martin, 80796 München (DE)
(74) Vertreter: v. Bezold & Partner Patentanwälte - PartG mbB

(56) Entgegenhaltungen:
- DE-A1- 10 128 871
- DE-A1- 19 530 419
- DE-A1-102007 042 294
- DE-A1-102012 024 951
- US-A1- 2012 223 964

## Beschreibung

Die vorliegende Erfindung betrifft eine Vorrichtung zum Anzeigen einer Zeitabhängigkeit eines Zahlenwertes an einem Fahrerplatz eines Fahrzeugs, insbesondere eines Kraftfahrzeugs.

Herkömmliche Zeigerinstrumente, einschließlich solcher die ausschließlich digital an einem hauchauflösenden Bildschirm angezeigt werden, können einen Ist-Wert übersichtlich darstellen. Soll einer Fahrerin oder einem Fahrer jedoch auch Information zur zeitlichen Veränderung des Wertes angezeigt werden, erfordert dies herkömmlicherweise ein separates Zeigerinstrument, das beispielsweise die Änderungsrate des Wertes anzeigt, oder eine zusätzliche symbolische oder textbasierte Anzeige. Dadurch nimmt jedoch die Komplexität der Darstellung zu, so dass die Fahrerin oder der Fahrer jeweils auf die beiden Anzeigen und damit länger auf das Kombi-Instrument blicken muss und dadurch von der Fahraufgabe abgelenkt ist. Zudem ist der wechselseitige Bezug zwischen der Anzeige des Ist-Wertes und der Anzeige seiner Veränderung unklar.

Das Dokument US 2012/223964 A1 offenbart eine Anzeigevorrichtung, welche ein Anzeigeelement aufweist, das konfiguriert ist, um ein Nachbild eines Zeigers anzuzeigen, das sich in einer Richtung erstreckt, die einer Bewegungsrichtung des Zeigers entgegengesetzt ist; und ein Anzeigesteuerelement, das konfiguriert ist, um das Anzeigeelement zu steuern, um das Nachbild des Zeigers anzuzeigen. Somit wird die Änderung des Zeigers zeitverzögert angezeigt.

Das Dokument DE 101 28 871 A1 offenbart ein Verfahren zur Anzeige von Fahr- und Betriebsparametern in einem Kraftfahrzeug, bei welchem über eine Zeigerdarstellung Betriebsparameter entlang einer Skala angezeigt und um den Zeiger eine Nachleuchtfläche generiert wird, sowie eine Anzeigeeinrichtung selbst. Um hierbei zu erreichen, dass bei bewegtem Zeiger im Gesamteindruck ein die Trägheit des Auges zufriedenstellendes Ableseergebnis generiert wird, ist vorgesehen, dass die Breite der Nachleuchtfläche in Abhängigkeit zur Winkelgeschwindigkeit der Zeigerbewegung variabel generiert wird.

Das Dokument DE 10 2007 042 294 A1 offenbart eine Anzeigeeinheit für ein Kraftfahrzeug und ein Verfahren zur Ansteuerung einer Anzeigeeinheit für ein Kraftfahrzeug mittels einer Anzeigeeinheit und mindestens einem Eingabemittel, wobei die Anzeigeeinheit einen zentralen Anzeigebereich sowie mindestens einen weiteren Nebenbereich umfasst, wobei im zentralen Anzeigebereich und im Nebenbereich voneinander unabhängige Informationen darstellbar sind, wobei im zentralen Anzeigebereich die Informationen mit einer größeren Informationstiefe dargestellt werden als die Informationen im Nebenbereich.

Das Dokument DE 195 30 419 A1 offenbart ein elektronisches Anzeigeinstrument mit mehreren Flüssigkristallzellen, die auf einem Zifferblatt zumindest im Bereich des maximalen Anzeigeabschnitts dicht nebeneinander angeordnet sind. Gesteuert wird die Flüssigkristallzelle, die einem Zeiger unmittelbar zugeordnet ist. Die Steuerung bleibt auch bei einer Verschiebung des Zeigers für eine bestimmte Dauer bestehen. Die Zeitspanne für die Steuerung ist einstellbar.

Das Dokument DE 10 2012 024 951 A1 offenbart eine Anzeigeeinrichtung für ein Kraftfahrzeug, umfassend mindestens ein erstes Anzeigemittel zur Anzeige eines aktuellen antriebsstrang-bezogenen Wertes des Kraftfahrzeugs sowie ein zweites Anzeigemittel, das eine Reserve des antriebsstrang-bezogenen Wertes mit mindestens einem Grenzwert darstellt, wobei die Anzeige des zweiten Anzeigemittels das Beschleunigungsverhalten zum Erreichen des mindestens einen Grenzwertes der Reserve des antriebsstrang-bezogenen Wertes widerspiegelt und/oder der Grenzwert abhängig vom Beschleunigungsverhalten gewählt wird, sowie ein Verfahren zur Anzeige eines antriebsstrang-bezogenen Wertes für ein Kraftfahrzeug.

Somit besteht die Aufgabe, eine Vorrichtung anzugeben, welche einen im Fahrzeugbetrieb veränderlichen Zahlenwert auch hinsichtlich seiner Veränderlichkeit anzeigt, ohne eine Fahrerin oder einen Fahrer zusätzlich von der Fahraufgabe abzulenken.

Diese Aufgabe wird durch eine Anzeigevorrichtung und ein entsprechendes Nutzfahrzeug mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem Aspekt ist eine Vorrichtung zum Anzeigen einer Zeitabhängigkeit eines Zahlenwertes an einem Fahrerplatz eines Fahrzeugs bereitgestellt. Das Fahrzeug ist vorzugsweise ein Kraftfahrzeug. Die Vorrichtung umfasst eine Anzeige, die dazu ausgebildete ist, eine Skala des Zahlenwertes anzuzeigen. Die Vorrichtung umfasst ferner eine zum Steuern der Anzeige mit der Anzeige in Signalaustausch stehende oder bringbare Steuerung. Die Steuerung ist dazu ausgebildet, den Zahlenwert und die Zeitabhängigkeit des Zahlenwertes zu erfassen und auf der Skala der Anzeige den Zahlenwert und bei Werten (beispielsweise Skalenwerte der Skala), die größer und/oder kleiner als der Zahlenwert sind, die Zeitabhängigkeit des Zahlenwertes anzuzeigen.

Indem auf derselben Skala sowohl der Zahlenwert als auch dessen Zeitabhängigkeit angrenzend an den Zahlenwert angezeigt sind, können Ist-Wert und Veränderlichkeit des Zahlenwertes zusammenhängend und übersichtlich angezeigt sein. Somit ist es der Fahrerin oder dem Fahrer auf einen Blick möglich, sowohl den Ist-Wert des Zahlenwertes als auch dessen Zeitabhängigkeit zu erfassen. Ferner kann eine Darstellung der Zeitabhängigkeit diese klassifizieren oder kategorisieren, beispielsweise um auf ein ökonomisches oder un-ökonomisches Fahrverhalten hinzuweisen.

Die Zeitabhängigkeit kann eine Änderungsrate, eine zeitliche Ableitung und/oder einen zeitlichen Verlauf des Zahlenwertes umfassen.

Der angezeigte Zahlenwert kann ein Ist-Wert sein. Die Zeitabhängigkeit kann eine Veränderung des Ist-Wertes bezüglich eines früheren (beispielsweise früher angezeigten) Wertes des Zahlenwertes umfassen. Die Zeitabhängigkeit, insbesondere die Veränderung, kann sich auf eine vorbestimmte Zeitdauer beziehen. Beispielsweise können Veränderungen als die Zeitabhängigkeit angezeigt sein, sofern sie nicht länger als die vorbestimmte Zeitdauer zurückliegen.

Das Fahrzeug kann insbesondere ein Landfahrzeug oder ein Wasserfahrzeug sein. Das Landfahrzeug kann insbesondere ein Kraftfahrzeug sein. Das Kraftfahrzeug kann ein Nutzfahrzeug sein, insbesondere ein Bus, ein Lastkraftwagen oder eine Zugmaschine.

Die Skala kann diskrete Werte umfassen. Die Steuerung kann dazu ausgebildet sein, den Zahlenwert mittels eines ersten Balkens am dem Zahlenwert entsprechenden diskreten Wert der Skala anzuzeigen.

Die Steuerung kann dazu ausgebildet sein, die Zeitabhängigkeit außerhalb des ersten Balkens und/oder (beispielsweise direkt) neben dem ersten Balken anzuzeigen. Die Steuerung kann dazu ausgebildet sein, die Zeitabhängigkeit bei diskreten Werten, die größer und/oder kleiner als der Zahlenwert sind, anzuzeigen.

Die Steuerung ist erfindungsgemäß dazu ausgebildet , die Zeitabhängigkeit mittels eines Musters bei Werten, die größer und/oder kleiner als der Zahlenwert sind, anzuzeigen. Das Muster kann einen Verlauf eines Quermaßes entlang der Skala umfassen oder implizieren. Das Quermaß kann zur Skala senkrecht sein. Das Quermaß kann auch als Höhe bezeichnet werden. Die Höhe kann quer zur Längsrichtung der Skala (z. B. senkrecht zu einer gezeigten oder impliziten Achse steigender Werte der Skala) angezeigt sein. Bei einer gekrümmten Skala (beispielsweise einer Skala entlang eines Kreisbogens) kann das Quermaß eine radiale Höhe sein.

Ein geradliniger Verlauf der Höhe kann eine Zeitabhängigkeit mit (beispielsweise gegenwärtiger) Konstanz des Zahlenwertes anzeigen. Der geradlinige Verlauf der Höhe kann auch als lineare Rampe bezeichnet werden. Die Zeitabhängigkeit mit (beispielsweise gegenwärtiger) Konstanz des Zahlenwertes kann auch als ein stationärer Zustand des Zahlenwertes bezeichnet werden. Alternativ oder ergänzend kann ein gekrümmter Verlauf der Höhe einer (beispielsweise gegenwärtigen) Zunahme und/oder Abnahme des Zahlenwertes entsprechen.

Das die Zeitabhängigkeit anzeigende Muster (d. h. das auf der Skala die Zeitabhängigkeit repräsentierende Muster), beispielsweise der Verlauf des Quermaßes (insbesondere der Verlauf der Höhe zweiter Balken) können einer Simulation einer Wellenbewegung einer Flüssigkeit entsprechen. Beispielsweise kann das Quermaß des Musters oder die Höhe der zweiten Balken einer Oberflächenwelle (insbesondere einer Schwerewelle) entsprechen. Der zeitabhängige Zahlenwert (beispielsweise der erste Balken) kann als in die Oberfläche der Flüssigkeit eintauchendes Hindernis die Wellenbewegung anregen.

Die Zeitabhängigkeit kann eine Zunahme des Zahlenwertes anzeigen, indem sich gemäß der Simulation ein Tal in der Oberfläche der Flüssigkeit ausbildet bei den Werten der Skala, die kleiner als der Zahlenwert sind. Das Tal kann einem Unterdruck, einem Sog oder einer Heckwelle entsprechen.

Die Zeitabhängigkeit kann eine Abnahme des Zahlenwertes anzeigen, indem sich gemäß der Simulation eine zu größeren Werten hin abfallende Oberfläche der Flüssigkeit ausbildet bei den Werten der Skala, die größer als der Zahlenwert sind. Die abfallende Oberfläche kann einem Wasserfall oder einem Ablauf entsprechen.

Alternativ oder ergänzend kann das Muster einen Schriftzug und/oder ein Symbol umfassen. Die Zeitabhängigkeit kann durch eine Verzerrung des Schriftzugs oder des Symbols angezeigt sein.

Alternativ oder ergänzend können ein Schriftzug und/oder ein Symbol ausschließlich im Fall eines zunehmenden und/oder abnehmenden Zahlenwertes angezeigt sein. Optional kann der Schriftzug und/oder das Symbol verzerrt angezeigt sein, falls (beispielsweise genau dann wenn) die Zunahme und/oder die Abnahme nicht einer Sollzunahme (beispielsweise Sollbeschleunigung) bzw. Sollabnahme (beispielsweise Sollverzögerung) entspricht.

Die Steuerung kann dazu ausgebildet sein, die Zeitabhängigkeit mittels eines Musters bei diskreten Werten anzuzeigen, die größer und/oder kleiner als der Zahlenwert sind. Das Muster kann mehrere zweite Balken an diesen diskreten Werten der Skala umfassen. Optional können die mehreren zweiten Balken des Musters jeweils kleiner (in der Höhe und/oder ihrer Breite) und/oder dunkler sein als der erste Balken.

Die Steuerung kann dazu ausgebildet sein, die Zeitabhängigkeit auf der Skala bei Werten anzuzeigen, die kleiner als der Zahlenwert sind, falls die Zeitabhängigkeit eine zeitliche Zunahme des Zahlenwertes umfasst. Das Muster (beispielsweise der Verlauf des Quermaßes) kann ein Maximum und/oder die zweiten Balken (beispielsweise der Verlauf deren Höhe) können ein Maximum aufweisen bei Werten, die kleiner als der Zahlenwert sind. Der Abstand zwischen dem Wert auf der Skala, welcher dem Maximum entspricht und dem Zahlenwert kann ein Maß für die Rate der zeitlichen Zunahme des Zahlenwertes sein.

Das Muster (beispielsweise der Verlauf des Quermaßes) bzw. die zweiten Balken (beispielsweise der Verlauf deren Höhe) können bei den Werten, die kleiner als der Zahlenwert sind, einen konkaven Musterabschnitt und/oder einen Musterabschnitt mit dem Maximum umfassen. Das Maximum kann entlang der Skala im Verlauf des Quermaßes quer zur Skala angezeigt sein. Alternativ oder ergänzend kann das Muster ein Maximum hinsichtlich einer Größe (Höhe und/oder Breite) der zweiten Balken sein.

Die Steuerung kann dazu ausgebildet sein, die Zeitabhängigkeit auf der Skala bei Werten anzuzeigen, die größer als der Zahlenwert sind, falls die Zeitabhängigkeit eine zeitliche Abnahme des Zahlenwertes umfasst. Das Muster (beispielsweise der Verlauf des Quermaßes) kann und/oder die zweiten Balken (beispielsweise der Verlauf deren Höhe) können einen streng-monoton fallenden Verlauf entlang der Skala oder einen Abfall entlang der Skala aufweisen bei Werten, die größer als der Zahlenwert sind. Der fallende Verlauf oder Abfall kann auch als Schweif bezeichnet werden. Die Länge des Schweifes entlang der Skala kann ein Maß für die Rate der zeitlichen Abnahme des Zahlenwertes sein.

Das Muster kann und/oder die zweiten Balken können bei den Werten, die größer als der Zahlenwert sind, einen konvexen und/oder streng-monoton fallenden Musterabschnitt umfassen. Das streng monotone Fallen (auch: Abfallen) kann eine durch das Muster quer zur Skala angezeigte Höhe umfassen, die entlang der Skala abfällt (d. h. sich reduziert). Die abfallende Höhe kann eine Größe der zweiten Balken sein.

Das Muster kann und/oder die zweiten Balken können ein Quermaß quer zur Skala aufweisen. Die Steuerung kann dazu ausgebildet sein, das Quermaß bei den Werten, die kleiner als der Zahlenwert sind, mit einer vorbestimmten Rate bis zu einem Höchstmaß zu vergrößern. Alternativ oder ergänzend kann die Steuerung dazu ausgebildet sein, das Quermaß bei den Werten, die größer als der Zahlenwert sind, mit einer vorbestimmten Rate bis zu einem Mindestmaß zu verkleinern. Das Höchstmaß kann proportional zum jeweiligen Wert auf der Skala sein. Beispielsweise kann der jeweilige zweite Balken bis zu einer Höhe der linearen Rampe vergrößert werden. Alternativ oder ergänzend kann das Mindestmaß Null sein. Beispielsweise kann der Balken verkleinert werden bis zu seinem Verschwinden.

Jeder der zweiten Balken kann, falls der jeweilige zweite Balken bei kleineren Werten als dem Zahlenwert steht, mit einer vorbestimmten Rate quer zur Skala (z. B. in seiner Höhe) ansteigen, beispielsweise von der Höhe Null (vorzugsweise bezogen auf die Skala) zu einer der linearen Rampe entsprechenden Höhe. Alternativ oder ergänzend kann jeder zweite Balken, falls der jeweilige zweite Balken bei größeren Werten als dem Zahlenwert steht, mit einer vorbestimmten Rate quer zur Skala (z. B. in seiner Höhe) abnehmen, beispielsweise von einer der linearen Rampe entsprechenden Höhe zur Höhe Null auf der Skala. Die beschriebene Dynamik für die zweiten Balken kann bei einem Muster oder einer kontinuierlichen Darstellung (beispielsweise ohne die an diskreten Werten angezeigten zweiten Balken) entsprechend für den Verlauf des Quermaßes an jedem Wert der Skala gelten.

Die Steuerung kann dazu ausgebildet sein, die einen (beispielsweise temporär, gegenwärtig und/oder vorübergehend) konstanten Zahlenwert umfassende Zeitabhängigkeit mittels eines Musters auf der Skala anzuzeigen, das bei kleineren Werten als dem Zahlenwert die linear steigende Rampe umfasst. Der (beispielsweise temporär, gegenwärtig und/oder vorübergehend) konstante Zahlenwert kann auch als stationärer Zustand des Zahlenwertes bezeichnet werden. Vorzugsweise ist zum Anzeigen des zeitlich konstanten Zahlenwertes bei größeren Werten als dem Zahlenwert kein Muster (beispielsweise kein zweiter Balken) auf der Skala angezeigt.

Durch die linear steigende Rampe kann der Zahlenwert, zusätzlich zu seiner Position auf der Skala, durch die Höhe der Rampe (beispielsweise am höherwertigen Ende oder dem dem ersten Balken zugewandten Ende der Rampe) angezeigt sein. Die Höhe der Rampe und die Länge der Rampe können der Fahrerin oder dem Fahrer im stationären Zustand den Zahlenwert als redundante Information anzeigen.

Der Zahlenwert kann einer dynamischen Größe des Fahrzeugs, einer Fahrtgeschwindigkeit des Fahrzeugs, einer Leistungsbilanz eines Antriebstrangs des Fahrzeugs und/oder einer Drehzahl eines Antriebstrangs des Fahrzeugs entsprechen. Die dynamische Größe des Fahrzeugs kann eine Größe sein, die vom Fahrbetrieb abhängt und/oder die im Fahrbetrieb sowohl zeitweise zunimmt als auch zeitweise abnimmt. Ausführungsbeispiele der Vorrichtung sind für jedes Instrument (insbesondere jedes Rundinstrument) eines Kombi-Instruments einsetzbar.

Ein stationäres Muster kann einer Sollbeschleunigung und/oder einer Sollverzögerung entsprechen. Das stationäre Muster kann ein Muster sein, das nicht mit der Zeit zerfließt. Das stationäre Muster kann zusammenhängend mit dem Zahlenwert (insbesondere mit dem ersten Balken) entlang der Skala bewegt werden, ohne seine Form zu verändern.

Die Sollbeschleunigung kann einer ökonomischen Fahrweise entsprechen. Eine ökonomische Fahrweise kann durch eine obere Schranke an die Beschleunigung vorbestimmt sein. Die obere Schranke der Beschleunigung kann einer (beispielsweise hinsichtlich Wirkungsgrad) optimalen Beschleunigung entsprechen. Die Sollbeschleunigung kann eine Beschleunigung sein, bei der ein Getriebe oder andere Komponenten des Antriebsstrangs optimale Schaltpunkte nutzen (beispielsweise beim Einsatz einer Brennkraftmaschine) und/oder bei der nur rekuperierte Energie das Fahrzeug beschleunigt antreibt (beispielsweise beim Einsatz eines elektrischen Antriebs), und/oder bei der nur elektrisch angetrieben wird und noch nicht eine Brennkraftmaschine zugeschaltet wird (beispielsweise bei einem Hybridantrieb mit Elektromaschine und Brennkraftmaschine).

Alternativ oder ergänzend kann eine ökonomische Fahrweise durch eine obere Schranke an die Verzögerung (d. h. eine negative untere Schranke an die Beschleunigung) vorbestimmt sein. Die obere Schranke der Verzögerung kann einem Übergang von einer mittels Rekuperation (d. h. mittels einer als Generator betriebenen Elektromaschine) bewirkten Verzögerung oder simulierten Bremse zu einer dissipativen Bremse entsprechen. Die Sollverzögerung kann einer verschleißfreien Verzögerung und/oder einer Verzögerung ohne Einsatz einer Betriebsbremse entsprechen. Die Betriebsbremse oder die dissipative Bremse kann eine Reibbremse (beispielsweise durch Reibung von Bremsbacken an einer Bremsscheibe), eine Viskositätsbremse oder eine Wirbelstrombremse umfassen.

Die Anzeige kann an einem Kombi-Instrument und/oder einer Mittelkonsole angeordnet oder anordenbar sein. Alternativ oder ergänzend kann die Anzeige eine Head-Up-Anzeige umfassen oder nutzen.

Die Skala (beispielsweise eine Achse entlang der die Werte der Skala abgetragen werden oder angezeigt sind) kann gekrümmt oder geradlinig ist. Eine gekrümmte Skala kann sich entlang eines Kreisbogens erstrecken.

Gemäß einem weiteren Aspekt ist ein Fahrzeug, beispielsweise ein Landfahrzeug oder ein Wasserfahrzeug, bereitgestellt, das eine Vorrichtung gemäß einer Ausführung des Vorrichtungsaspekts umfasst. Das Landfahrzeug kann insbesondere ein Nutzfahrzeug (beispielsweise ein Bus, ein Lastkraftwagen oder eine Zugmaschine) sein. Zumindest die Anzeige der Vorrichtung kann in einem Fahrerhaus des Fahrzeugs angeordnet sein.

Weitere Merkmale und Vorteile der Erfindung werden im Folgenden unter Bezugnahme auf die beigefügten Zeichnungen beschrieben. Es zeigen:
- Figur 1: eine schematische Ansicht eines Ausführungsbeispiels der Vorrichtung zum Anzeigen einer Zeitabhängigkeit eines Zahlenwertes;
- Figur 2A: ein erstes Beispiel einer Anzeige der Vorrichtung der Figur 1 bei zunehmender Zeitabhängigkeit;
- Figur 2B: ein zweites Beispiel der Anzeige der Vorrichtung bei zunehmender Zeitabhängigkeit, wobei eine Rate der Zunahme größer ist als bei Figur 2A;
- Figur 3A: ein drittes Beispiel der Anzeige der Vorrichtung bei zunehmender Zeitabhängigkeit;
- Figur 3B: ein viertes Beispiel der Anzeige der Vorrichtung bei zunehmender Zeitabhängigkeit, wobei eine Rate der Zunahme gleich ist wie bei Figur 2A;
- Figur 4: ein fünftes Beispiel der Anzeige der Vorrichtung bei abnehmender Zeitabhängigkeit;
- Figur 5: ein sechstes Beispiel der Anzeige der Vorrichtung bei abnehmender Zeitabhängigkeit;
- Figur 6A: ein siebtes Beispiel der Anzeige der Vorrichtung bei abnehmender Zeitabhängigkeit;
- Figur 6B: ein siebtes Beispiel der Anzeige der Vorrichtung bei abnehmender Zeitabhängigkeit; und
- Figuren 7 bis 10: eine Variante zu jedem Ausführungsbeispiel, bei dem die Skala auf einem Kreisbogen liegt.

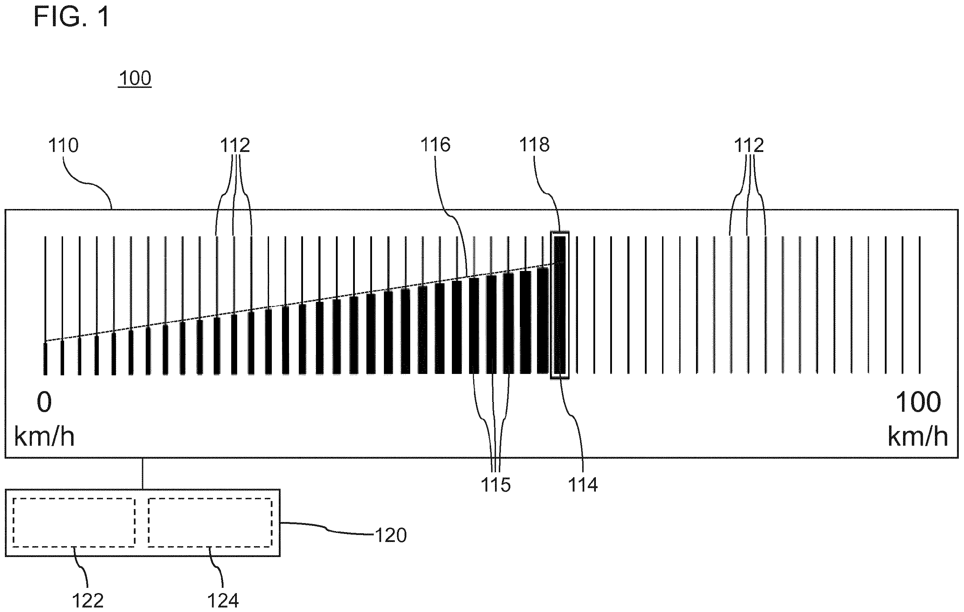

Figur 1 zeigt eine schematische Ansicht eines Ausführungsbeispiels einer allgemein mit Bezugszeichen 100 bezeichneten Vorrichtung zum Anzeigen einer Zeitabhängigkeit eines Zahlenwertes an einem Fahrerplatz eines Fahrzeugs, insbesondere eines Kraftfahrzeugs. Die Vorrichtung 100 umfasst eine Anzeige 110, die dazu ausgebildete ist, eine Skala 112 des Zahlenwertes anzuzeigen. Die Vorrichtung 100 umfasst ferner eine zum Steuern der Anzeige 110 mit der Anzeige in Signalaustausch stehende oder bringbare Steuerung 120. Die Steuerung 120 ist dazu ausgebildet, den Zahlenwert und die Zeitabhängigkeit des Zahlenwertes zu erfassen. Die Steuerung 120 ist ferner dazu ausgebildet, auf der Skala 112 der Anzeige 110 den Zahlenwert beim Bezugszeichen 114 und bei Werten 115, die größer und/oder kleiner als der Zahlenwert sind, die Zeitabhängigkeit des Zahlenwertes anzuzeigen. Somit ist die Zeitabhängigkeit auf der Skala 112 durch ein Muster angezeigt, das allgemein (insbesondere formunabhängig) mit Bezugszeichen 116 bezeichnet wird. Da sich das Muster 116 vorzugsweise an den Zahlenwert 114 anschließt, wird das Muster 116 auch als Schweif des Zahlenwertes 114 bezeichnet.

Die Steuerung 120 kann eine Einheit 122 zur Signalverarbeitung, beispielsweise mindestens einen Prozessor und einen mit diesem in Datenaustausch stehenden Speicher umfassen. Ferner kann die Steuerung 120 eine Einheit 124 zur Benutzereingabe durch die Fahrerin oder den Fahrer des Fahrzeugs umfassen.

Vorzugsweise ist der Zahlenwert 114 auf der Skala 112 durch einen ersten Balken angezeigt, der breiter und/oder heller ist als jeder eine Reihe zweiter Balken bei den Werten 115 zum Anzeigen des Musters 116. Alternativ oder ergänzend ist der den Zahlenwert 114 repräsentierende erste Balken ferner durch eine Umrandung oder einen Helligkeitsschein 118 (der auch als "Glow" bezeichnet wird) gegenüber den zweiten Balken hervorgehoben.

Das in Figur 1 gezeigte Ausführungsbeispiel der Vorrichtung 100 ermöglicht die Anzeige eines Zahlenwertes, wobei die grafische Darstellung des Zahlenwertes 114 über die Skala 112 erfolgt. Der aktuelle Wert, d. h. der Ist-Wert des Zahlenwertes, wird mit einem Zeigerelement, beispielsweise einem hervorgehobenen Skalenstrich als dem ersten Balken, gekennzeichnet. Hierin wird das Bezugszeichen 114 sowohl für den Zahlenwert als auch dessen Darstellung auf der Skala 112 verwendet.

Die Darstellung des Zahlenwertes 114 zieht entlang der Skala 112 den Schweif als das Muster 116 mit sich, dessen Breite und Höhe eine Wertzunahme widerspiegeln. Durch diese redundante Kombination von Skalenposition, Breite und Höhe ist der Zahlenwert 114 auf einen Blick, und sogar aus dem Augenwinkel, klar erfassbar. Zudem ändert sich die Intensität (z. B. Farbintensität, Leuchtkraft oder Konturdicke) des Schweifes hin zu dem den Zahlenwert 114 anzeigenden, hervorgehobenen Strich der Skala 112. Dieser leuchtet visuell und ist von der Hervorhebung 118 (z. B. einem Schein oder englisch "Glow") umgeben.

In der in Figur 1 dargestellten beispielhaften Situation zeigt die Anzeige 110 auf der Skala 112 einen stationären oder zeitlich konstanten Zahlenwert 114 an, indem bei den Werten 115, die kleiner als der Zahlenwert 114 sind, eine lineare Rampe als das Muster 116 angezeigt ist.

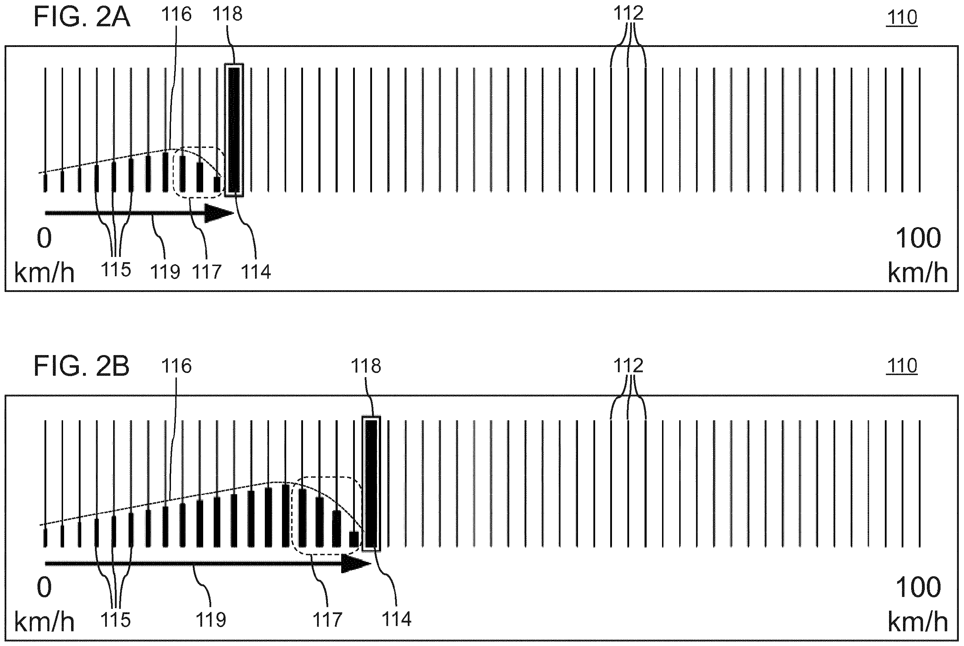

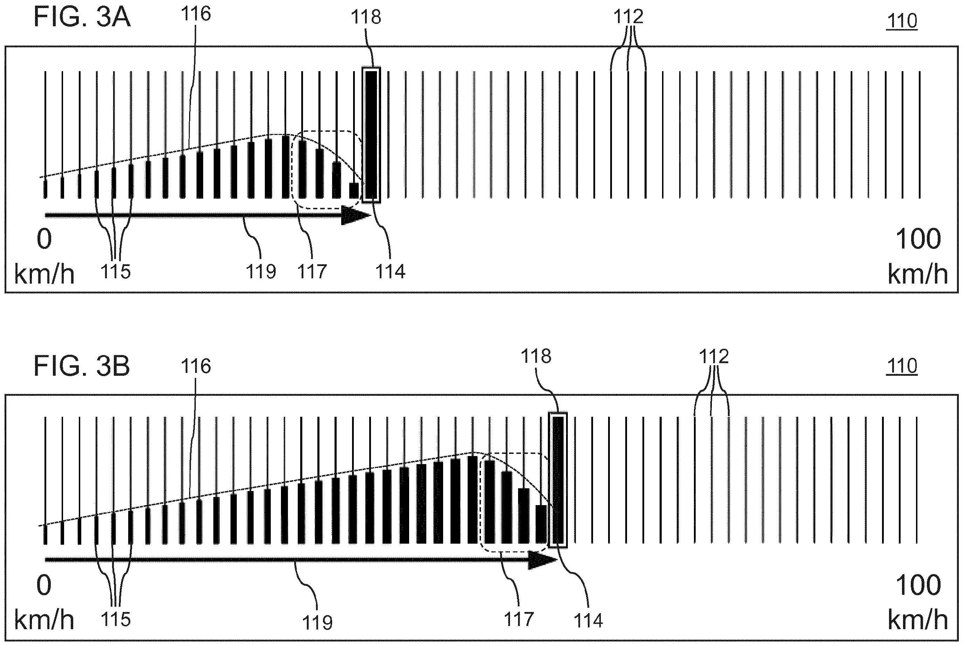

Die Figuren 2A, 2B, 3A und 3B zeigen jeweils beispielhafte Situationen einer gegenwärtigen Wertzunahme, beispielsweise während des Fahrbetriebs und/oder durch den Fahrbetrieb des Fahrzeugs. Ein Pfeil 119 parallel zur Längsrichtung der Skala 112 zeigt den Umfang der Wertzunahme.

Angelehnt an das Bewegungsmuster eines trägen Fluides oder die Simulation einer Wasserwelle wird die Zeitabhängigkeit, d. h. ein Werteausschlag des Zahlenwertes 114, durch das Muster 116 angezeigt.

Der Grundaufbau des Schweifes als Muster 116 ist linear aufsteigend, beispielsweise wie in Figur 1 schematisch gezeigt. Befindet sich der Zahlenwert 114 noch in der Zunahme, ergibt sich unmittelbar hinter dem Zeiger des Zahlenwertes 114, d. h. in einem Musterabschnitt 117 bei Werten 115, die kleiner als der Zahlenwert 114 sind, eine zeitliche Verzögerung des Schweifaufbaus.

Durch das Muster 116 ist die Zunahme als Zeitabhängigkeit des Zahlenwertes 114 einstückig mit dem Zahlenwert 114 auf einer Skala 112 angezeigt. Dadurch kann die Fahrerin oder der Fahrer auf einen Blick auch die Zeitabhängigkeit des Zahlenwertes 114 erfassen. Ferner kann die Größe des Musterabschnitts 117 eine Rate der Zunahme anzeigen. Beispielsweise besteht bei der in Figur 2A gezeigten Situation eine Zunahme, deren Rate durch drei im Aufbau befindliche zweite Balken im Musterabschnitt 117 angezeigt ist. Diese Zunahme beschleunigt sich bei der in Figur 2B gezeigten Situation zu einer Rate der Zunahme, die durch vier im Aufbau befindliche zweite Balken im Musterabschnitt 117 angezeigt ist.

Die Zunahme des Zahlenwertes 114 kann somit durch ein Maximum im Muster 116 anzeigt sein. Die Rate der Zunahme kann durch den Abstand zwischen dem Maximum und dem Zahlenwert 114 auf der Skala angezeigt sein.

Die Figuren 3A und 3B zeigen beispielhafte, zeitlich aufeinanderfolgende Situationen einer gleichbleibenden Zunahme. Im gezeigten Beispiel ist die Rate der Zunahme durch jeweils vier Balken im Musterabschnitt 117 zwischen dem Maximum und dem Zahlenwert 114 angezeigt.

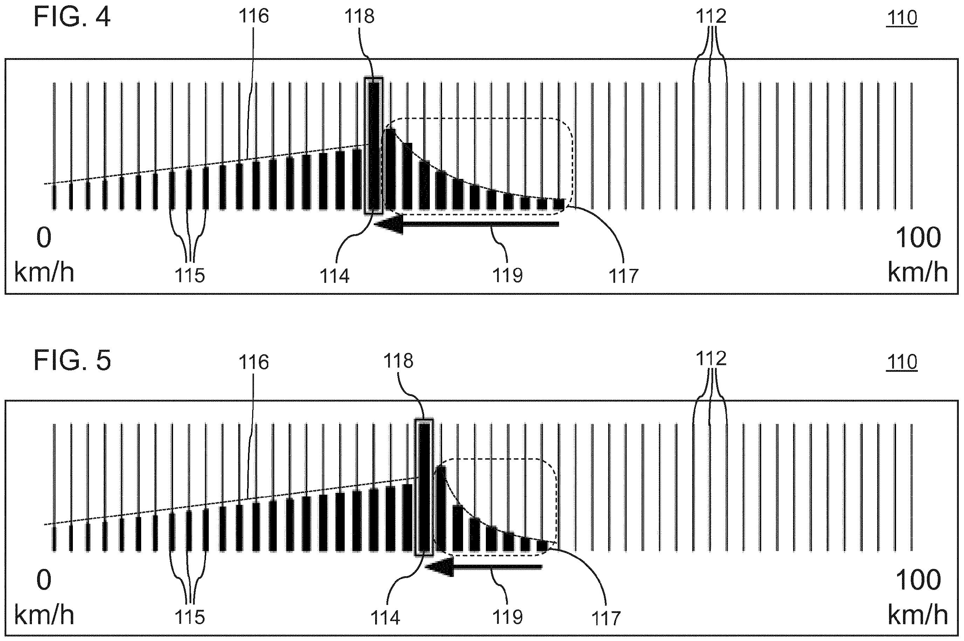

Die Figuren 4, 5, 6A, 6B zeigen jeweils eine beispielhafte Situation einer gegenwärtigen Wertabnahme des Zahlenwertes 114. Der Umfang der Wertabnahme ist durch einen Pfeil 119 angedeutet.

Die Rückbewegung des Zahlenwertes 114 (d. h. in Richtung eines Ursprungs der Skala 112) wird durch mindestens eines der folgenden Merkmale gekennzeichnet. Ein erstes Merkmal ist die Länge des Schweifes als Teil des Musters 116 vor dem Zeigerelement des Zahlenwertes 114 (d. h. bei Werten, die kleiner als der Zahlenwert sind). Diese Länge nimmt gegenläufig ab. Ein zweites Merkmal ist ein weiterer Schweif als Teil des Musters 116 im Musterabschnitt 117 bei Werten 115, die größer als der Zahlenwert 114 sind.

Beim abnehmenden Zahlenwert 114 zieht das den Zahlenwert 114 anzeigende Zeigerelement verzögert den zweiten Schweif hinter sich her. Je länger der rückläufige zweite Schweif (d. h. der Musterabschnitt 117) ist, desto schneller ist die Abnahme, d. h., umso größer ist eine Rate der Wertabnahme. Im Fall einer Fahrtgeschwindigkeit als Zahlenwert 114 ist die Länge des Musterabschnitts somit ein Maß für die Verzögerung. In der in Figur 4 dargestellten Situation ist eine durch 11 zweite Balken angezeigte Wertabnahme schneller als die durch 7 zweite Balken angezeigte Wertabnahme in der Situation der Figur 5.

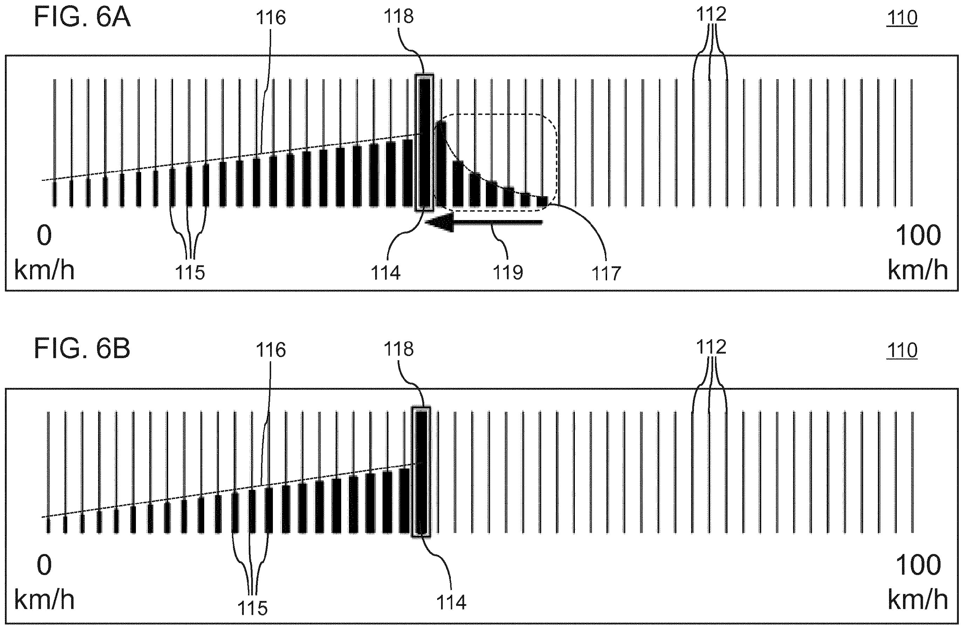

Die Figuren 6A und 6B zeigen zeitlich aufeinander folgende Situationen einer ungleichmäßigen Wertabnahme. In der in Figur 6A gezeigten Situation nimmt der Zahlenwert 114 ab, wie durch den Musterabschnitt 117 angezeigt ist. Sobald der in Figur 6A bereits angezeigte Ist-Wert erreicht ist, endet die Wertabnahme, so dass in der in Figur 6B gezeigten Situation wieder ein zeitlich konstanter Zahlenwert 114 angezeigt ist. D. h. der Zahlenwert 114 ist in einem definierten Zeitraum weitgehend konstant, weshalb der zweite Schweif im Musterabschnitt 117 sich zu Balken der Höhe Null auflöst und nur der Schweif als Muster 116 in seiner linearen Grundform verbleibt.

In einem Fahrzeugszenario kann durch die Vorrichtung 100 eine Sollbeschleunigung und/oder eine Sollverzögerung zwecks einer ökonomischen und/oder ökologischen Fahrweise vermittelt werden. Folgt der Schweif als Muster 116 dem den Zahlenwert 114 anzeigenden Zeiger formschlüssig, ohne ein Auseinanderlaufen oder Zerfließen von Zeiger und Schweif, d. h. bei gleichförmigem Musterabschnitt 17, dann ist die Sollbeschleunigung bzw. Sollverzögerung erreicht.

Die Trägheit des Schweifes kann zudem zur Verdeutlichung einer momentanen Abweichung zwischen einem angeforderten Wert (z. B. einer Bremsstufe einer Dauerbremse) und einem momentan verfügbaren Wert (z. B. einem Bremsmoment) genutzt werden.

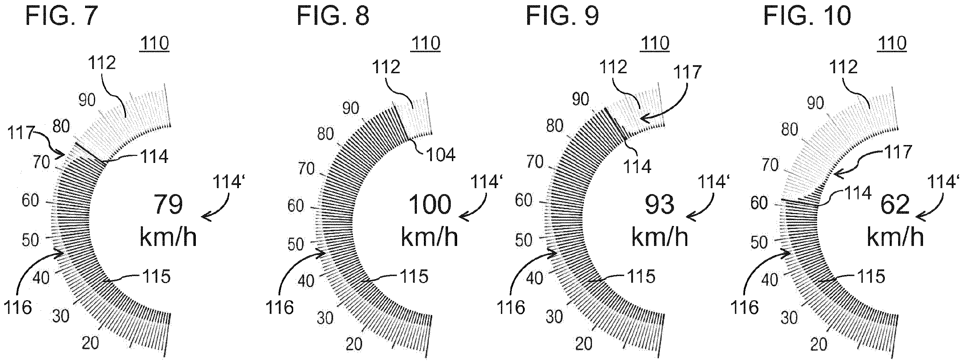

Die Figuren 7 bis 10 zeigen jeweils Varianten der Skala 112, die mit jedem vorstehend beschriebenen Ausführungsbeispiel und/oder jeder Situation kombinierbar sind. Die Skala 112 ist gekrümmt, vorzugsweise entlang eines Kreisbogens dargestellt. In dieser Variante erstreckt sich die Höhe des Musters 116 radial nach außen. Optional ist bei der Skala 112 auf der Innenseite der Krümmung, d. h. bei einer Kreismitte des Kreisbogens, eine numerische Darstellung 114' des Zahlenwerts 114 angezeigt.

### Bezugszeichenliste

- 100: Vorrichtung zum Anzeigen einer Zeitabhängigkeit
- 110: Anzeige
- 112: Skala
- 114: Zahlenwert repräsentierender erster Balken
- 115: Muster repräsentierende Werte, vorzugsweise zweite Balken
- 116: Zeitabhängigkeit repräsentierendes Muster
- 117: Musterabschnitt
- 118: Hervorhebung des Zahlenwertes
- 119: Pfeil zu Umfang und Richtung der Zeitabhängigkeit
- 120: Steuerung
- 122: Einheit zur Signalverarbeitung
- 124: Einheit zur Benutzereingabe

## Patentansprüche

1. Vorrichtung (100) zum Anzeigen einer Zeitabhängigkeit (116) eines Zahlenwertes (114) an einem Fahrerplatz eines Fahrzeugs, insbesondere eines Kraftfahrzeugs oder eines Nutzfahrzeugs, umfassend:
eine Anzeige (110), die dazu ausgebildet ist, eine Skala (112) des Zahlenwertes (114) anzuzeigen; und
eine zum Steuern der Anzeige (110) mit der Anzeige (110) in Signalaustausch stehende oder bringbare Steuerung (120), die dazu ausgebildet ist, den Zahlenwert (114) und die Zeitabhängigkeit (116) des Zahlenwertes zu erfassen und auf der Skala (112) der Anzeige (110) den Zahlenwert (114) und bei Werten (115), die größer und/oder kleiner als der Zahlenwert (114) sind, die Zeitabhängigkeit (116) des Zahlenwertes (114) anzuzeigen, wobei die Steuerung (120) dazu ausgebildet ist, die Zeitabhängigkeit mittels eines Musters (116) bei Werten (115), die größer und/oder kleiner als der Zahlenwert (114) sind, anzuzeigen, wobei das Muster (116) ein Quermaß quer zur Skala (112) aufweist, **dadurch gekennzeichnet, dass** die Steuerung (120) dazu ausgebildet ist, das Quermaß bei den Werten (115), die kleiner als der Zahlenwert (114) sind, mit einer vorbestimmten Rate bis zu einem Höchstmaß zu vergrößern und/oder das Quermaß bei den Werten (115), die größer als der Zahlenwert (114) sind, mit einer vorbestimmten Rate bis zu einem Mindestmaß zu verkleinern.

2. Vorrichtung nach Anspruch 1, wobei die Skala (112) diskrete Werte umfasst und die Steuerung (120) dazu ausgebildet ist, den Zahlenwert (114) mittels eines ersten Balkens am dem Zahlenwert (114) entsprechenden diskreten Wert der Skala (112) anzuzeigen.

3. Vorrichtung nach Anspruch 1 oder 2, wobei die Steuerung (120) dazu ausgebildet ist, die Zeitabhängigkeit mittels eines Musters (116) bei diskreten Werten, die größer und/oder kleiner als der Zahlenwert (114) sind, anzuzeigen, wobei das Muster (116) mehrere zweite Balken an den diskreten Werten (115) der Skala (112) umfasst, welche das Quermaß quer zur Skala (112) aufweisen.

4. Vorrichtung nach einem der Ansprüche 1 oder 3, wobei die Steuerung (120) dazu ausgebildet ist, die Zeitabhängigkeit auf der Skala (112) bei Werten (115) anzuzeigen, die kleiner als der Zahlenwert (114) sind, falls die Zeitabhängigkeit eine zeitliche Zunahme des Zahlenwertes umfasst.

5. Vorrichtung nach Anspruch 4, wobei das Muster (116) ein Maximum aufweist und/oder die zweiten Balken ein Maximum aufweisen.

6. Vorrichtung nach einem der vorhergehenden Ansprüche, wobei die Steuerung (120) dazu ausgebildet ist, die Zeitabhängigkeit auf der Skala (112) bei Werten anzuzeigen, die größer als der Zahlenwert (114) sind, falls die Zeitabhängigkeit eine zeitliche Abnahme des Zahlenwertes umfasst.

7. Vorrichtung nach Anspruch 6, wobei das Muster (116) und/oder die zweiten Balken bei den Werten, die größer als der Zahlenwert (114) sind, einen streng-monoton fallenden Musterabschnitt (117) umfassen.

8. Vorrichtung nach einem der Ansprüche 1 bis 7, wobei die Steuerung (120) dazu ausgebildet ist, die einen temporär konstanten Zahlenwert (114) umfassende Zeitabhängigkeit mittels eines Musters (116) auf der Skala (112) darzustellen, das bei kleineren Werten als der Zahlenwert (114) eine linear steigende Rampe umfasst.

9. Vorrichtung nach einem der Ansprüche 1 bis 8, wobei der Zahlenwert (114) einer dynamischen Größe des Fahrzeugs, einer Fahrtgeschwindigkeit des Fahrzeugs, einer Leistungsbilanz eines Antriebstrangs des Fahrzeugs und/oder einer Drehzahl eines Antriebstrangs des Fahrzeugs entspricht.

10. Vorrichtung nach Anspruch 9, wobei ein stationäres Muster (116) einer Sollbeschleunigung und/oder einer Sollverzögerung entspricht.

11. Vorrichtung nach einem der Ansprüche 1 bis 10, wobei die Anzeige (110) an einem Kombi-Instrument und/oder einer Mittelkonsole angeordnet oder anordenbar ist und/oder eine Head-Up-Anzeige umfasst.

12. Vorrichtung nach einem der Ansprüche 1 bis 11, wobei die Skala (112) gekrümmt oder geradlinig ist.

13. Nutzfahrzeug, umfassend ein Fahrerhaus, in dem eine Vorrichtung gemäß einem der Ansprüche 1 bis 12 angeordnet ist.

## Claims

1. An apparatus (100) for displaying a time dependence (116) of a numerical value (114) at a driver's position in a vehicle, in particular a motor vehicle or a commercial vehicle, comprising:
a display (110) configured to display a scale (112) of the numerical value (114); and
a controller (120), which is connected or connectable to the display (110) so as to exchange signals for controlling the display (110) and is configured to capture the numerical value (114) and the time dependence (116) of the numerical value and to display the numerical value (114) and, for values (115) greater than and/or smaller than the numerical value (114), the time dependence (116) of the numerical value (114) on the scale (112) of the display (110), wherein the controller (120) is configured to display the time dependence by means of a pattern (116) for values (115) greater than and/or smaller than the numerical value (114), wherein the pattern (116) has a transverse dimension transversely to the scale (112),
**characterized in that** the controller (120) is configured to increase the transverse dimension at a predetermined rate up to a maximum dimension for the values (115) that are smaller than the numerical value (114) and/or to reduce the transverse dimension at a predetermined rate up to a minimum dimension for values (115) that are greater than the numerical value (114).

2. The apparatus according to Claim 1, wherein the scale (112) comprises discrete values and the controller (120) is configured to display the numerical value (114) by means of a first bar at the discrete value of the scale (112) that corresponds to the numerical value (114) .

3. The apparatus according to Claim 1 or 2, wherein the controller (120) is configured to display the time dependence by means of a pattern (116) for discrete values greater than and/or smaller than the numerical value (114), wherein the pattern (116) comprises a plurality of second bars, having the transverse dimension transversely to the scale (112), at the discrete values (115) of the scale (112).

4. The apparatus according to one of Claims 1 or 3, wherein the controller (120) is configured to display the time dependence on the scale (112) for values (115) smaller than the numerical value (114) if the time dependence comprises a temporal increase in the numerical value.

5. The apparatus according to Claim 4, wherein the pattern (116) has a maximum and/or the second bars have a maximum.

6. The apparatus according to one of the preceding claims, wherein the controller (120) is configured to display the time dependence on the scale (112) for values greater than the numerical value (114) if the time dependence comprises a temporal decrease in the numerical value.

7. The apparatus according to Claim 6, wherein the pattern (116) and/or the second bars for the values greater than the numerical value (114) comprise a strictly monotonically decreasing pattern section (117).

8. The apparatus according to one of Claims 1 to 7, wherein the controller (120) is configured to represent the time dependence comprising a temporally constant numerical value (114) on the scale (112) by means of a pattern (116) that comprises a linearly increasing ramp for smaller values than the numerical value (114).

9. The apparatus according to one of Claims 1 to 8, wherein the numerical value (114) corresponds to a dynamic variable of the vehicle, a driving speed of the vehicle, a performance record of a drivetrain of the vehicle and/or a rotational speed of a drivetrain of the vehicle.

10. The apparatus according to Claim 9, wherein a stationary pattern (116) corresponds to a target acceleration and/or a target deceleration.

11. The apparatus according to one of Claims 1 to 10, wherein the display (110) is arranged or arrangeable on an instrument cluster and/or a centre console and/or comprises a head-up display.

12. The apparatus according to one of Claims 1 to 11, wherein the scale (112) is curved or straight.

13. A commercial vehicle, comprising a driver cab, in which an apparatus according to one of Claims 1 to 12 is arranged.

## Revendications

1. Dispositif (100) permettant d'afficher une dépendance du temps (116) d'une valeur numérique (114) à un poste de conducteur d'un véhicule, en particulier d'un véhicule automobile ou d'un véhicule utilitaire, comprenant :
un affichage (110) qui est réalisé pour afficher une échelle (112) de la valeur numérique (114) ; et
un dispositif de commande (120) étant ou pouvant être mis en échange de signaux avec l'affichage (110) pour commander l'affichage (110) et qui est réalisé pour acquérir la valeur numérique (114) et la dépendance du temps (116) de la valeur numérique et pour afficher sur l'échelle (112) de l'affichage (110) la valeur numérique (114), et pour des valeurs (115) qui sont supérieures et/ou inférieures à la valeur numérique (114), la dépendance du temps (116) de la valeur numérique (114), le dispositif de commande (120) étant réalisé pour afficher la dépendance du temps au moyen d'un motif (116) pour des valeurs (115) qui sont supérieures et/ou inférieures à la valeur numérique (114), le motif (116) présentant une dimension transversale transversalement à l'échelle (112),
**caractérisé en ce que** le dispositif de commande (120) est réalisé pour augmenter la dimension transversale pour les valeurs (115) qui sont inférieures à la valeur numérique (114) à un taux prédéterminé jusqu'à une dimension maximale, et/ou pour diminuer la dimension transversale pour les valeurs (115) qui sont supérieures à la valeur numérique (114) à un taux prédéterminé jusqu'à une dimension minimale.

2. Dispositif selon la revendication 1, dans lequel l'échelle (112) comprend des valeurs discrètes et le dispositif de commande (120) est réalisé pour afficher la valeur numérique (114) au moyen d'une première barre sur la valeur discrète de l'échelle (112) qui correspond à la valeur numérique (114).

3. Dispositif selon la revendication 1 ou 2, dans lequel le dispositif de commande (120) est réalisé pour afficher la dépendance du temps au moyen d'un motif (116) pour des valeurs discrètes qui sont supérieures et/ou inférieures à la valeur numérique (114), le motif (116) comprenant plusieurs deuxièmes barres sur les valeurs discrètes (115) de l'échelle (112) qui présentent la dimension transversale transversalement à l'échelle (112).

4. Dispositif selon l'une quelconque des revendications 1 ou 3, dans lequel le dispositif de commande (120) est réalisé pour afficher la dépendance du temps sur l'échelle (112) pour des valeurs (115) qui sont inférieures à la valeur numérique (114) si la dépendance du temps comprend une augmentation dans le temps de la valeur numérique.

5. Dispositif selon la revendication 4, dans lequel le motif (116) présente un maximum, et/ou les deuxièmes barres présentent un maximum.

6. Dispositif selon l'une quelconque des revendications précédentes, dans lequel le dispositif de commande (120) est réalisé pour afficher la dépendance du temps sur l'échelle (112) pour des valeurs qui sont supérieures à la valeur numérique (114) si la dépendance du temps comprend une diminution dans le temps de la valeur numérique.

7. Dispositif selon la revendication 6, dans lequel le motif (116) et/ou les deuxièmes barres comprennent une partie de motif (117) descendant de manière strictement monotone pour les valeurs qui sont supérieures à la valeur numérique (114).

8. Dispositif selon l'une quelconque des revendications 1 à 7, dans lequel le dispositif de commande (120) est réalisé pour représenter au moyen d'un motif (116) sur l'échelle (112) la dépendance du temps comprenant une valeur numérique (114) temporairement constante, ledit motif comprenant une rampe montante linéaire pour des valeurs inférieures à la valeur numérique (114).

9. Dispositif selon l'une quelconque des revendications 1 à 8, dans lequel la valeur numérique (114) correspond à une grandeur dynamique du véhicule, à une vitesse de déplacement du véhicule, à un bilan de performance d'une chaîne cinématique du véhicule et/ou à une vitesse de rotation d'une chaîne cinématique du véhicule.

10. Dispositif selon la revendication 9, dans lequel un motif stationnaire (116) correspond à une accélération théorique et/ou à une décélération théorique.

11. Dispositif selon l'une quelconque des revendications 1 à 10, dans lequel l'affichage (110) est ou peut être disposé sur un instrument combiné et/ou une console centrale et/ou comprend un affichage tête haute.

12. Dispositif selon l'une quelconque des revendications 1 à 11, dans lequel l'échelle (112) est courbe ou droite.

13. Véhicule utilitaire, comprenant une cabine de conducteur dans laquelle est disposé un dispositif selon l'une quelconque des revendications 1 à 12.
